# EUROPEAN PATENT SPECIFICATION

(11) **EP 0 601 689 B1**
(45) Date of publication and mention of the grant of the patent: **22.07.1998**
(21) Application number: 93306400.8
(22) Date of filing: 13.08.1993
(51) Int. Cl.: G01N 1/28

(54) **Secondary ion mass spectrometric analysis of metals and method of preparing standard sample therefor**
Sekundärionen-massenspektrometrische Analyse von Metallen und Verfahren zur Herstellung eines Probenstandards hierfür
Analyse des métaux par spectrometrie de masse à ion secondaire et méthode de préparation d'un standard d'échantillon pour celle-ci

(30) Priority: 08.12.1992 JP 351649/92
(43) Date of publication of application: 15.06.1994
(73) Proprietor: DIRECTOR-GENERAL OF THE AGENCY OF INDUSTRIAL SCIENCE AND TECHNOLOGY, Tokyo (JP)
(72) Inventor: Oishi, Shoji, Tsukuba-shi, Ibaraki-ken (JP)
(74) Representative: Allam, Peter Clerk

(56) References cited:
- US-A- 5 081 352
- ANALYTICAL CHEMISTRY, vol. 46, no. 11, September 1974, pp. 1487-1491; T. ISHIZUKA : 'Secondary ion mass spectrometry of rare earth elements'
- DATABASE WPI Week 8505, Derwent Publications Ltd., London, GB; AN 85-30609 & SU-A-1 101 714
- PATENT ABSTRACTS OF JAPAN vol. 8, no. 265 (P-318)5 December 1984 & JP-A-59 132 344
- DATABASE WPI Week 8436, Derwent Publications Ltd., London, GB; AN 84-222745 & JP-A-59 132 344

## Description

This invention relates to a method of preparing a solid sample, from either a metal-containing sample liquid or a metal-containing solid, for the determination of the concentration of the metal by secondary ion mass spectrometry, and to a method of secondary ion mass spectrometric analysis using such a sample.

Ion mass spectrometric analysis has been applied to a variety of solid materials such as films, metals and dusts. In this technique, a sample is bombarded with an ion beam of, for example, 5-15 KeV Ar⁺, to cause neutral atoms and ions to be ejected from the sample. The positive ions are extracted into a mass spectrometer and analyzed. Details of this technique are disclosed in, for example, Morrison, G.H. et al, Analytical Chemistry, 47, 933 (1975) and Ishizuka, T., Analytical Chemistry, 46, 1487 (1974).

The conventional method using secondary ion mass spectrometry has a problem because it cannot be applied for the analysis of an insulating sample. While incorporation of carbon into the sample could solve the problem of static charging, another problem would arise because the carbon adversely affects the resolution of the mass spectrum. The conventional method poses a further problem because the intensity of the secondary ion varies when the sample is not homogeneous. This will be easily appreciated since the sample is bombarded with a microbeam.

In order to obtain exact quantitative analytical data by secondary ion mass spectrometric analysis, it is necessary to prepare a calibration curve using a standard sample having a known composition. No satisfactory method is, however, known in the art which can prepare a desired standard sample matching a sample to be measured.

The present invention has been made to solve the above problems.

A paper by Toshio Ishizuka in Analytical Chemistry, 46, No. 11, September 1974, pages 1487-1491 discloses the preparation of samples of rare earth elements for secondary ion mass spectrometry by the steps of:
(1) dissolving the rare earth elements in 1M nitric acid to form a 2% stock solution thereof,
(2) separating the rare earth elements from the stock solution as solids, by evaporation or precipitation,
(3) converting the thus obtained solids into oxides by heating at 900°C, and
(4) forming the thus-obtained metal oxides into pellets.

The present invention provides a method of preparing a solid sample from a metal-containing liquid for use in secondary ion mass spectrometric analysis for the determination of the concentration of the metal, comprising the steps of:
(a) separating said metal as solids from said liquid to form a first solid mass containing said metal;
(b) calcining said solid mass to convert said metal into an oxide of said metal and to obtain a second solid mass; and
(c) forming said second solid mass into a disc;
the method being characterized in that said disc-forming step (c) includes the sub-steps of:
(i) mixing said second solid mass obtained in step (b) with silver powder in an amount of 0.15 to 5 parts by weight per part by weight of said metal oxide to obtain a mixture having a particle size of not greater than 100 µm; and
(ii) forming said mixture obtained in sub-step (i) into said disc.

The method of the present invention may be used to prepare samples for secondary ion mass spectrometric analysis from both solid and liquid metal-containing materials.

When the material to be analyzed is a solid it is first converted into a metal-containing liquid by mixing it with a liquid to dissolve the metal and thus to obtain a solution containing the metal.

The method of the present invention may be employed to prepare a standard sample useful in the preparation of calibration curves, by first forming a solution of a first, reference metal and at least one second metal having a predetermined composition.

The present invention also provides a method of analyzing a metal-containing material by secondary ion mass spectrometry for the determination of the concentration of the metal, comprising the steps of processing the metal-containing material into a disc by a method of this invention, and subjecting said disc to a secondary ion mass spectrometric analysis.

The present invention will now be described in detail with reference to the accompanying drawings, in which:
Fig. 1 is a calibration curve prepared using a standard sample obtained in Example 1 and showing the relationship between the ion intensity ratio (⁴⁸Ti⁺/⁵⁶Fe⁺) and the concentration of Ti based on Fe; and
Fig. 2 is a calibration curve prepared using a standard sample obtained in Example 1 and showing the relationship between the ion intensity ratio (⁵¹V⁺/⁵⁶Fe⁺) and the concentration of V based on Fe.

The present invention is directed to a method of preparing a sample of a metal-containing material for quantitative analysis using a secondary ion mass spectrometer, and to such an analysis method using a sample thus prepared. Any commercially available ion micro analyzer (or ion microprobe mass analyzer) may be suitably used in the analysis method of the present invention. Examples of such analyzers include Hitachi Ion Micro Analyzer (Hitachi Co., Ltd., Japan), the GCA Ion Microprobe Analytical Mass Spectrometer (GCA Technology Division, USA) and CAMECA IMS ion microscope (CAMECA Inc, France).

When the sample is to be prepared from a solid, metal-containing material, the material is first mixed with a suitable liquid to dissolve the metal and to obtain a solution containing the dissolved metal. The metal in the metal-containing material may be in the form of an elemental metal or a metal compound. The liquid to be used for the dissolution of the metal may be, for example, an aqueous acid solution such as nitric acid or hydrochloric acid. Except silver, any metal may be analyzed in accordance with the method of this invention. Examples of such metals include Fe, Mn, Ti, V, Cr, Cu, Ni, Sn, Ga, Ta, Al, Zr, rare earth elements and mixtures two or more thereof.

The metal dissolved in the solution is then separated therefrom as solids. Various method may be adopted for the solidification and separation of the metal. For example, when the solution is an aqueous acid solution, the separation of the metal may be suitably performed by neutralizing the solution with an alkali such as sodium hydroxide, potassium hydroxide or ammonia to precipitate the metal as a hydroxide and, thereafter, separating the precipitates by, for example, filtration. Alternatively, an organic reagent such as oxine may be used for the precipitation of the dissolved metal as a metal complex. Further, evaporation of the solution to dryness can give the solidified metal.

The thus separated solidified metal component (first solid mass) is then calcined at a temperature sufficient to convert the metal component into an oxide of the metal, preferably at 250-350 °C, thereby obtaining a second solid mass. If necessary, the calcination of the first solid mass is preceded by drying at, for example, 80-150 °C.

The second solid mass is ground into particles having a particle size of not greater than 100 µm, preferably not greater than 80 µm, and mixed with silver powder having a particle size of not greater than 100 µm, preferably not greater than 80 µm. The amount of the silver powder is 0.15-5 parts by weight, preferably 0.3-2 parts by weight, per part by weight of the metal oxide. It is convenient to pulverize the second solid mass together with commercially available silver powder with an average particle size of, for example, 30-80 µm into a particle size of 100 µm or less.

The resulting admixture is then shaped into a disc by any suitable known method, such as by press-molding at 100-400 kg/cm². The disc can then be mounted on a holder of an ion microanalyzer and bombarded with a microbeam in any suitable known manner.

When the sample is to be prepared from a liquid, metal-containing material, the material is first processed to separate the metal as solids. This can be performed in the same manner as the above. The separated solids (first solid mass) are then dried, calcined, admixed with silver powder and shaped into a disc, in the same manner as above.

The above technique can be applied for the preparation of standard samples used for preparing calibration curves. Thus, a solution of a first, reference metal (M₁) and a second metal (M₂) having a predetermined composition is first prepared. The solution is then processed to separate the first and second metals as solids. This can be performed in the same manner as the above. The separated solids (first solid mass) are then dried, calcined, admixed with silver powder and shaped into a disc, in the same manner as above, thereby obtaining the desired standard sample having known composition of the metals M₁ and M₂. In this case, it is advantageous to prepare a standard sample containing one standard metal and a plurality of metals having known composition.

By preparing various standard samples with different compositions and by analyzing these samples with the secondary ion mass spectrometer, a calibration curve representing a relationship between an ion intensity ratio (M₂⁺/M₁⁺) and a relative concentration of M₂ in M₁ can be obtained. Using the thus prepared calibration curve, the concentration of metal M₂ in a sample containing metals M₁ and M₂ can be determined according to the method of the present invention. In this case, the concentration of the reference metal M₁ should be determined by another method such as ICP-AES (inductively coupled plasma-atomic emission spectrometry).

When the sample to be measured contains Fe, it is recommended to use Fe as the reference metal for the standard samples. However, any metal may be used as the reference metal of standard samples, irrespective of whether or not the metal is contained in the sample to be measured. For example, Y (yttrium) may be used as the reference metal of standard samples for the analysis of yttrium-free samples. In this case, the reference metal should be incorporated as an internal standard into the samples to be measured.

The following examples will further illustrate the present invention.

### Example 1

Dust sample obtained from a dust separator of an iron sintering furnace was analyzed for the amounts of Mn, Ti, V and Cr according to the method of the present invention. The dust sample was first analyzed by ICP-AES to reveal that the iron content was 42 % by weight.

### Preparation of Standard Samples:

Metallic iron was dissolved in hydrochloric acid to obtain an aqueous stock solution having an iron content of 1 % by weight (as elementary iron). A quantity of a second metal M₂ (Mn, Ti, V or Cr) was dissolved in 10 ml of the stock solution. The resulting second metal-containing solution was admixed with an aqueous sodium hydroxide solution to a pH of in the range of 9-11 to coprecipitate the second metal M₂ together with Fe as hydroxides. The precipitates were filtered and calcined at about 300 °C in an electric oven. The calcined product in the form of oxides was pulverized into a particle size of 74 µm or less and mixed with the same amount of metallic silver powder (average particle size of 43 µm). The mixture was press-molded in a die at about 200 kg/cm² to obtain a disc. The above procedure was repeated in the same manner as described with various amounts of respective second metals.

### Construction of Calibration Curves:

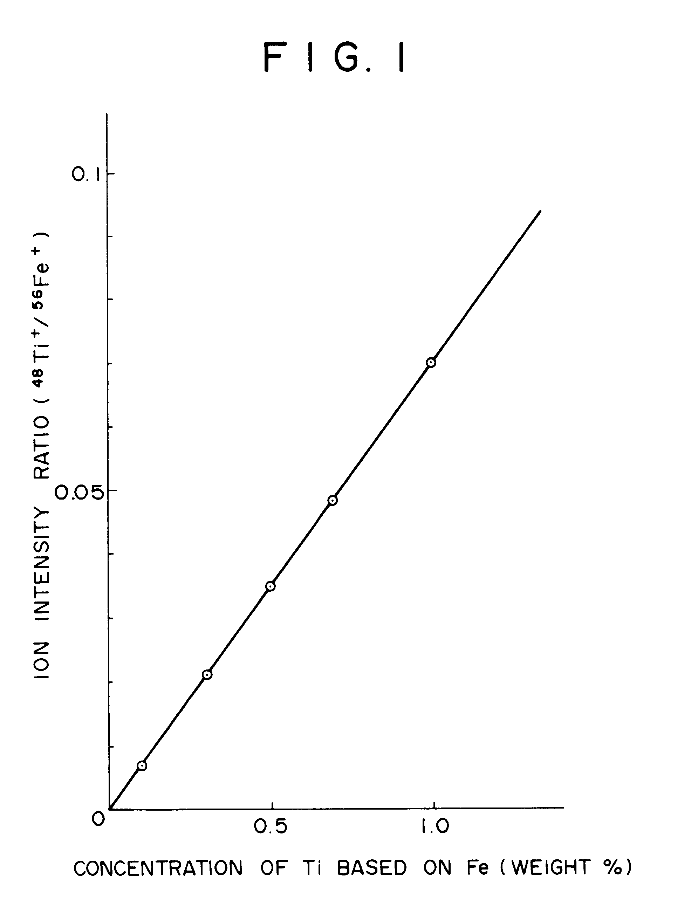

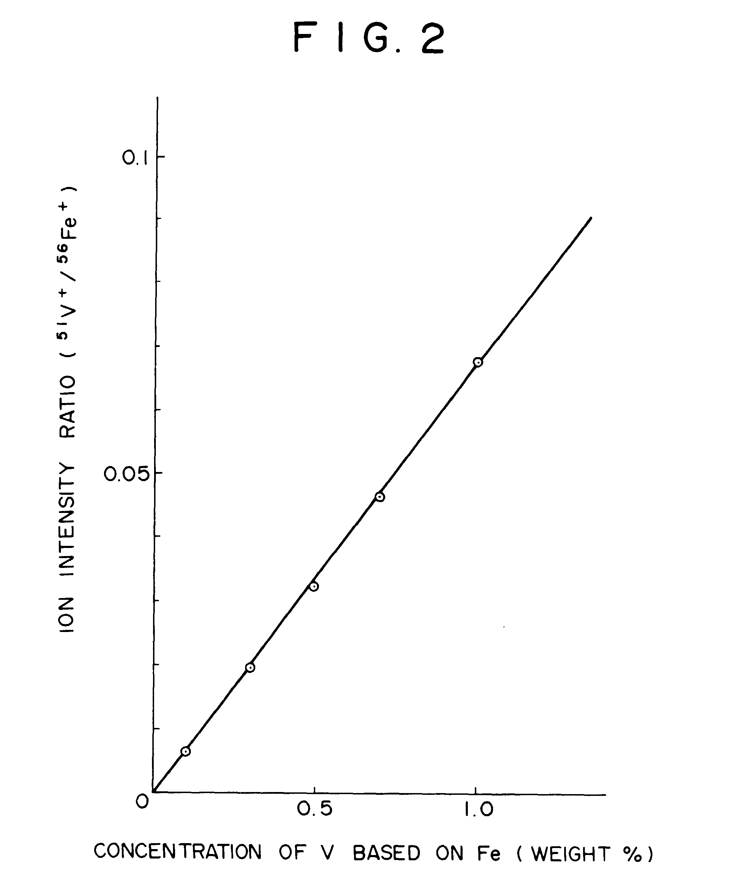

The thus prepared standard samples were subjected to secondary ion mass spectrometry using Ion Microanalyzer IMA-2 (manufactured by Hitachi Ltd.) to measure the ion intensities M₂⁺ and Fe⁺. The ratios M₂⁺/Fe⁺ were plotted against the concentrations of M₂ (% by weight) based on Fe to form calibration curves. Figs. 1 and 2 illustrates the calibration curves of Ti and V, respectively.

At a signal to noise ratio (S/N ratio) of 2, the detection limits of Ti and V were found to be 0.4 ppm and 0.9 ppm, respectively, in terms of the content based on the weight of Fe.

The operating conditions of the ion microanalyzer were as follows:

| | |
|---|---|
| Primary ion | Ar⁺ |
| Primary ion accelerating potential | 12 kV |
| Primary ion current | 1-5 µA |
| Primary ion beam spot diameter | 800 µm |
| Degree of vacuum | 7-6.7 x 10⁻⁵ Pa |
| Slit | 0.5 mm |
| Multiplier voltage | 1.4 kV |

### Reproducibility Tests:

A number of similar standard samples were prepared and measured for ion intensities. The standard variation of the ion intensities was as summarized in Table 1 below.

**Table 1**

| Concentration of Second Metal Relative To Iron (µg/g) | Standard Variation (%) | |
|---|---|---|
| | Ti | V |
| 1,000 | 1.2 | 1.5 |
| 3,000 | 0.82 | 0.84 |
| 10,000 | 0.24 | 0.56 |

The above standard samples were again measured on a different day on a different place. The standard variation of the ion intensities was as summarized in Table 2 below.

**Table 2**

| Concentration of Second Metal Relative To Iron (µg/g) | Standard Variation (%) | |
|---|---|---|
| | Ti | V |
| 1,000 | 0.98 | 1.1 |
| 3,000 | 0.38 | 0.59 |
| 10,000 | 0.23 | 0.48 |

### Analysis of Dust Sample:

The dust sample was dissolved in a hydrochloric acid/hydrogen peroxide mixed solution and neutralized with an aqueous sodium hydroxide solution. The precipitates are calcined, mixed with Ag powder and shaped into a tablet in the same manner as that in the preparation of the standard samples. The disc was analyzed on the ion microanalyzer to measure ion intensities M₂⁺. Based on the M₂⁺/Fe⁺ value, the concentration of M₂ was determined from the calibration curves. The results are shown in Table 3 together with those determined by ICP-AES.

**Table 3**

| Metal | Secondary Ion Mass Spectrometry of the Present Invention (based on Fe) | ICP-AES (based on Fe) |
|---|---|---|
| Fe | - | 42 % |
| Mn | 0.62 % | 0.59 % |
| Ti | 0.52 % | 0.54 % |
| V | 510 ppm | 420 ppm |
| Cr | 60 ppm | 50 ppm |

### Example 2

### Preparation of Standard Samples:

Predetermined amounts (0.05 and 0.1 % by weight based on Fe) of Ti, Cr and Mn (as second metals) were dissolved in the stock solution prepared in Example 1. The resulting solution containing Fe, Ti, Cr and Mn was admixed with an aqueous sodium hydroxide solution to a pH of in the range of 9-11 to coprecipitate these metals as hydroxides. The precipitates were processed, mixed with Ag and shaped into a disc in the same manner as that of Example 1 to obtain two standard samples of a four components system. Above procedures were repeated in the same manner as described except that Ti, Cr and Mn were separately dissolved in the stock solution, thereby obtaining six standard samples of a two components system.

### Secondary Ion Mass Spectrometry:

Each of the standard samples was then measured for the relative ion intensity (M₂⁺/⁵⁶Fe⁺). The results are summarized in Table 4.

**Table 4**

| Second Metal | Concentration of Second Metal Based on Fe (% by weight) | Relative Ion Intensity (x 10⁻³) | |
|---|---|---|---|
| | | Two Components System | Four Components System |
| Ti | 0.05 | 5.6 | 5.2 |
| Ti | 0.1 | 10.8 | 10.6 |
| Cr | 0.05 | 4.1 | 3.9 |
| Cr | 0.1 | 8.3 | 8.0 |
| Mn | 0.05 | 3.2 | 3.1 |
| Mn | 0.1 | 6.0 | 6.0 |

The results shown in Table 4 indicate that the presence of other metals in the standard samples of the four components system has little influence upon the ion intensities ratios. In the foregoing examples, bombardment with O₂⁺ was found to give the same analytical results.

## Claims

1. A method of preparing a solid sample from a metal-containing liquid for use in secondary ion mass spectrometric analysis for the determination of the concentration of the metal, comprising the steps of:
(a) separating said metal as solids from said liquid to form a first solid mass containing said metal;
(b) calcining said solid mass to convert said metal into an oxide of said metal and to obtain a second solid mass; and
(c) forming said second solid mass into a disc;
the method being characterized in that said disc-forming step (c) includes the sub-steps of:
(i) mixing said second solid mass obtained in step (b) with silver powder in an amount of 0.15 to 5 parts by weight per part by weight of said metal oxide to obtain a mixture having a particle size of not greater than 100 µm; and
(ii) forming said mixture obtained in sub-step (i) into said disc.

2. A method according to Claim 1, wherein said metal-containing liquid is formed by mixing a solid, metal-containing material with a liquid to dissolve said metal in said liquid and to obtain a solution containing said metal.

3. A method according to Claim 1 or Claim 2, wherein said metal-containing liquid is a solution of a first, reference metal and at least one second metal having a predetermined composition.

4. A method according to any preceding claim, wherein the particle size of the mixture formed in step (c) (i) is not greater than 80 µm.

5. A method according to any preceding claim, wherein the amount of silver powder used in step (c) (i) is 0.3 to 2 parts by weight per part by weight of said metal oxide.

6. A method according to any preceding claim, wherein step (b) is performed at 250°-350°C.

7. A method according to any preceding claim wherein, before step (b) is carried out the first solid mass obtained in step (a) is dried at 80°-150°C.

8. A method of analyzing a metal-containing material by secondary ion mass spectrometry for the determination of the concentration of the metal, comprising the steps of processing the metal-containing material into a disc by a method according to any preceding claim, and subjecting said disc to a secondary ion mass spectrometric analysis.

## Patentansprüche

1. Verfahren zur Herstellung einer Feststoffprobe aus einer metallhaltigen Flüssigkeit zur Verwendung in einer Sekundärionen-massenspektrometrischen Analyse zur Bestimmung der Konzentration des Metalls, das folgende Schritte umfaßt:
(a) Abtrennen des Metalls als Feststoffe aus der Flüssigkeit zur Bildung einer ersten, das Metall enthaltenden Feststoffmasse;
(b) Kalzinieren der Feststoffmasse zur Umwandlung des Metalls in ein Oxid des Metalls und zum Erhalt einer zweiten Feststoffmasse; und
(c) Formen der zweiten Feststoffmasse zu einer Scheibe;
wobei das Verfahren dadurch gekennzeichnet ist, daß der Schritt (c) des Formens der Scheibe folgende Teilschritte beinhaltet:
(i) Mischen der zweiten, in Schritt (b) erhaltenen Feststoffmasse mit Silberpuder in einer Menge von 0,15 bis 5 Massenteilen je Massenteil des Metalloxids zum Erhalt eines Gemischs mit einer Teilchengröße von höchstens 100 µm; und
(ii) Formen des im Teilschritt (i) erhaltenen Gemischs zur Scheibe.

2. Verfahren nach Anspruch 1, worin die metallhaltige Flüssigkeit gebildet wird durch Mischen eines festen metallhaltigen Stoffs mit einer Flüssigkeit, um das Metall in der Flüssigkeit zu lösen und eine das Metall enthaltende Lösung zu erhalten.

3. Verfahren nach Anspruch 1 oder 2, worin die metallhaltige Flüssigkeit eine Lösung aus einem ersten Vergleichsmetall und mindestens einem zweiten Metall mit einer bestimmten Zusammensetzung ist.

4. Verfahren nach einem der vorstehenden Ansprüche, worin die Teilchengröße des in Schritt (c) (i) gebildeten Gemischs höchstens 80 µm beträgt.

5. Verfahren nach einem der vorstehenden Ansprüche, worin die in Schritt (c) (i) eingesetzte Menge Silberpuder 0,3 bis 2 Massenteile je Massenteil des Metalloxids beträgt.

6. Verfahren nach einem der vorstehenden Ansprüche, worin Schritt (b) bei 250 bis 350 °C durchgeführt wird.

7. Verfahren nach einem der vorstehenden Ansprüche, worin vor der Ausführung von Schritt (b) die erste, in Schritt (a) erhaltene Feststoffmasse bei 80 bis 150°C getrocknet wird.

8. Verfahren zur Analyse eines metallhaltigen Stoffs mittels Sekundärionen-Massenspektrometrie zur Ermittlung der Konzentration des Metalls, das die Schritte Verarbeitung des metallhaltigen Stoffs zu einer Scheibe gemäß einem Verfahren nach einem der vorstehenden Ansprüche und Analysieren dieser Scheibe mittels Sekundärionen-Massenspektrometrie umfaßt.

## Revendications

1. Procédé de préparation d'un échantillon solide à partir d'un liquide contenant un métal en vue d'une utilisation dans une analyse par spectrométrie de masse d'ions secondaires pour la détermination de la concentration du métal, comprenant les étapes consistant à:
(a) séparer ledit métal sous forme de solides à partir dudit liquide pour former une première masse solide contenant ledit métal;
(b) calciner ladite masse solide pour convertir ledit métal en un oxyde dudit métal et pour obtenir une deuxième masse solide; et
(C) façonner ladite seconde masse solide en un disque;
le procédé étant caractérisé en ce que ladite étape (c) de façonnage de disque comprend les sous-étapes consistant à:
(i) mélanger ladite deuxième masse solide obtenue dans l'étape (b) avec une poudre d'argent à raison de 0,15 à 5 parties en poids par partie en poids dudit oxyde de métal afin d'obtenir un mélange ayant une granulométrie ne dépassant pas 100 µm; et
(ii) façonner ledit mélange obtenu dans la sous-étape (i) en ledit disque.

2. Procédé selon la revendication 1, dans lequel ledit liquide contenant un métal est formé en mélangeant une matière solide contenant un métal avec un liquide pour dissoudre ledit métal dans ledit liquide et pour obtenir une solution contenant ledit métal.

3. Procédé selon la revendication 1 ou la revendication 2, dans lequel ledit liquide contenant un métal est une solution d'un premier métal de référence et d'au moins un deuxième métal ayant une composition prédéterminée.

4. Procédé selon l'une quelconque des revendications précédentes, dans lequel la granulométrie du mélange formé dans l'étape (c) (i) ne dépasse pas 80 µm.

5. Procédé selon l'une quelconque des revendications précédentes, dans lequel la quantité de poudre d'argent utilisée dans l'étape (c) (i) est de 0,3 à 2 parties en poids par partie en poids dudit oxyde métallique.

6. Procédé selon l'une quelconque des revendications précédentes, dans lequel l'étape (b) est réalisée à une température de 250°C à 350°C.

7. Procédé selon l'une quelconque des revendications précédentes, dans lequel, avant que l'étape (b) soit réalisée, la première masse solide obtenue dans l'étape (a) est séchée à une température de 80° à 150°C.

8. Procédé d'analyse d'une matière contenant un métal à l'aide de spectrométrie de masse d'ions secondaires pour la détermination de la concentration du métal, comprenant les étapes consistant à transformer la matière contenant un métal en un disque à l'aide d'un procédé selon l'une quelconque des revendications précédentes, et à soumettre ledit disque à une analyse par spectrométrie de masse d'ions secondaires.
